(19) Europäisches Patentamt
European Patent Office
Office européen des brevets

(11) **EP 2 507 082 B1**

(12) **EUROPÄISCHE PATENTSCHRIFT**

(45) Veröffentlichungstag und Bekanntmachung des Hinweises auf die Patenterteilung:
**12.10.2016 Patentblatt 2016/41**

(21) Anmeldenummer: **10784698.2**

(22) Anmeldetag: **22.11.2010**

(51) Int Cl.:
***B60H 1/32*** *(2006.01)*

(86) Internationale Anmeldenummer:
**PCT/EP2010/007054**

(87) Internationale Veröffentlichungsnummer:
**WO 2011/066907 (09.06.2011 Gazette 2011/23)**

(54) **VERFAHREN ZUM STEUERN EINER KLIMATISIERUNG EINES INNENRAUMS EINES FAHRZEUGS**

METHOD FOR CONTROLLING THE AIR-CONDITIONING OF A VEHICLE INTERIOR

PROCÉDÉ DE COMMANDE DE LA CLIMATISATION D'UN HABITACLE DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.12.2009 DE 102009057173**

(43) Veröffentlichungstag der Anmeldung:
**10.10.2012 Patentblatt 2012/41**

(73) Patentinhaber: **Volkswagen Aktiengesellschaft**
**38436 Wolfsburg (DE)**

(72) Erfinder: **HELMS, Karsten**
**38553 Wasbüttel (DE)**

(56) Entgegenhaltungen:
**EP-A2- 0 749 858      EP-A2- 1 293 367**
**EP-B1- 0 316 545      DE-B3-102004 025 010**
**US-A- 5 826 439       US-A1- 2001 049 943**

## EP 2 507 082 B1

**Beschreibung**

Die Erfindung betrifft ein Verfahren zum Steuern einer Klimatisierung eines Innenraums eines Fahrzeugs sowie ein mit einer mit dem Verfahren betreibbaren Klimatisierung ausgestattetes Fahrzeug.

Verfahren zum Steuern einer Klimatisierung sind bekannt. Solche Systeme können beispielsweise zum Regeln einer Temperatur des Innenraums ausgelegt sein. Ferner ist es bekannt, Störgrößen, wie beispielsweise eine Außentemperatur oder eine einen Wärmeeintrag in den Innenraum bedingende Strahlungsintensität zu berücksichtigen beziehungsweise aufzuschalten. Als Stellmöglichkeiten sind beispielsweise die Beeinflussung einer Gebläsespannung, einer Ausblastemperatur und/oder einer Klappenstellung zur Beeinflussung einer Luftverteilung bekannt. Ferner sind Klimatisierungen bekannt, die einen Zustand des Innenraums beeinflussen, beispielsweise hinsichtlich der Temperatur und einer Feuchte des Innenraums. Aus der EP 0 316 545 B1 offenbart eine Klimaanlage für ein Kraftfahrzeug mit zur Entfeuchtung geeigneten Einrichtungen im Luftkanal, die von einem Microcomputer steuerbar sind, an den von Sensoren gemessene Werte für Außentemperatur, Innentemperatur und Innenfeuchte gelangen. Der Microcomputer berechnet aus den Werten für Außentemperatur, Innentemperatur und Innenfeuchte die Grenzfeuchte als Verhältnis des Sättigungsdampfdrucks innen an der Scheibe und des Sättigungsdampfdrucks der Innenluft und betätigt, falls die Differenz von Grenzfeuchte und Innenfeuchte einen bestimmten Wert unterschreitet, die Einrichtungen zur Entfeuchtung. Aus der DE 10 2004 025 010 B3 ist eine Vorrichtung zur Ermittlung von Beschlag auf einer Fläche eines Fahrzeugs bekannt. Bei der Fläche kann es sich um eine Innenseite einer Scheibe des Fahrzeugs handeln, mittels Leitern ist eine thermische Kopplung des Feuchtigkeitssensors mit der Fläche hergestellt, wobei die Leiter mit zweiten Steckkontaktelementen zur elektrischen Verbindung mit ersten Steckkontaktelementen und zur mechanischen Halterung einer Platine an den externen Leitern versehen sind.

US 2001/048943 offenbart eine Klimaanlage gemäß dem Oberbegriff des Anspruchs 1.

Aufgabe der Erfindung ist es, ein verbessertes Klimatisieren eines Innenraums eines Fahrzeugs zur ermöglichen, insbesondere mit einer minimalen Anzahl von Messstellen eine möglichst energiesparende und schwingungsarme Klimatisierung des Innenraums bereitzustellen.

Die Aufgabe ist bei einem Verfahren zum Steuern einer Klimatisierung eines Innenraums eines Fahrzeugs mittels einer dem Innenraum zugeordneten Wärmesenke gelöst. Es sind die Schritte: Steuern der Wärmesenke mittels Schalten der Wärmesenke in Abhängigkeit eines Schaltkriteriums, Ermitteln einer auf das Schaltkriterium zurückgehenden Schalthäufigkeit der Wärmesenke und Anpassen des Schaltkriteriums in Abhängigkeit der Schalthäufigkeit vorgesehen. Die Wärmesenke kann mittels verschiedener Schaltkriterien gesteuert werden, wobei unter der auf das Schaltkriterium zurückgehenden Schalthäufigkeit eine von dem jeweiligen Schaltkriterium verursachte Anforderung zum Anschalten, zum Abschalten und/oder zum An- und Abschalten der Wärmesenke verstanden werden kann. Vorteilhaft kann das Schaltkriterium mittels der Schalthäufigkeit so angepasst werden, dass sich eine verbesserte Klimatisierung des Innenraums ergibt, beispielsweise derart, dass eine Schwingungsfrequenz verändert wird, beispielsweise verringert. So kann vorteilhaft ein Kompromiss zwischen häufigen Schaltvorgängen und einer möglichst schwingungsarmen, als komfortabel empfundenen Klimatisierung des Innenraums mittels der Anpassung des Schaltkriteriums in Abhängigkeit der Schalthäufigkeit gefunden werden.

Bei einer Ausführungsform des Verfahrens ist ein Adaptieren des Schaltkriteriums auf eine in einer Umgebung des Fahrzeugs herrschende Störungsgröße mittels der Schalthäufigkeit vorgesehen. Insbesondere in Kenntnis eines Übertragungsverhaltens der Wärmesenke und/oder des Innenraums kann aus der Schalthäufigkeit ein Rückschluss auf die Störgröße gezogen werden. Vorteilhaft kann die Schalthäufigkeit damit so angepasst werden, dass sich insgesamt ein verbessertes, an die Störgröße angepasstes, Klimatisieren des Innenraums ergibt.

Bei einer weiteren Ausführungsform des Verfahrens ist ein Verwenden eines mittels einer einem Innenraum des Fahrzeugs zugeordneten Messvorrichtung ermittelbaren Messwerts einer Regelgröße des Innenraums und des Schaltkriteriums zum Schalten der Wärmesenke vorgesehen. Mit Hilfe des Schaltkriteriums und des Messwerts, der dazu beispielsweise mit in dem Schaltkriterium verglichen werden kann, kann die Regelgröße auf einen gewünschten Wert eingestellt werden.

Bei einer weiteren Ausführungsform des Verfahrens ist ein Abschätzen der Störgröße mittels der Schalthäufigkeit vorgesehen. Vorteilhaft kann die Störgröße abgeschätzt werden und steht damit einem entsprechenden Regelsystem zum Klimatisieren des Innenraums zur Verfügung, kann beispielsweise an einer entsprechenden Stelle aufgeschaltet werden.

Bei einer weiteren Ausführungsform des Verfahrens sind ein Vorgeben eines Störgrößenstartwerts der Störgröße und ein Einstellen des Schaltkriteriums in Abhängigkeit des Störgrößenstartwerts vorgesehen. Vorteilhaft kann, beispielsweise nach einem Einschalten der Klimatisierung und/oder einem Neustart des Fahrzeugs die Störgröße zunächst auf den Störgrößenstartwert geschätzt werden, so dass zunächst, auch ohne Erkenntnis der sich zu einem späteren Zeitpunkt ergebenden Schalthäufigkeit, die Klimatisierung starten kann.

Bei einer weiteren Ausführungsform des Verfahrens ist ein Einstellen des Schaltkriteriums in Abhängigkeit der Schalthäufigkeit mittels eines Veränderungsoperators vorgesehen. Bei dem Veränderungsoperator kann es sich beispielsweise um einen Offset und/oder einen Faktor handeln. Vorteilhaft kann in Abhängigkeit der Schalthäufigkeit das Schaltkriterium in der vorab beschriebenen positiven Art und Weise angepasst werden.

Bei einer weiteren Ausführungsform sind ein iteratives Anwenden des Veränderungsoperators auf das Schaltkriterium und/oder das iterative Anwenden des Veränderungsoperators auf das Schaltkriterium solange die Schalthäufigkeit einen Schalthäufigkeitsschwellwert übersteigt vorgesehen. Vorteilhaft kann geprüft werden, ob die Schalthäufigkeit den Schalthäufigkeitsschwellwert übersteigt, um als Reaktion darauf das Schaltkriterium mittels des Veränderungsoperators so zu verändern, dass die Schalthäufigkeit absinkt, insbesondere solange bis die Schalthäufigkeit den Schalthäufigkeitsschwellwert nicht mehr übersteigt.

Bei einer weiteren Ausführungsform des Verfahrens ist das iterative Anwenden des Veränderungsoperators auf das Schaltkriterium jeweils für einen Schaltvorgang des Schaltens und/oder jeweils für einen Anschalt- oder Ausschaltvorgang des Schaltens vorgesehen. Vorteilhaft erfolgt bei einer großen Schalthäufigkeit eine vergleichsweise schnelle Anpassung des Schaltkriteriums, da bei jedem Schalten, insbesondere Anschalten oder Ausschalten eine erneute Anpassung des Schaltkriteriums, die der Schalthäufigkeit entgegenwirkt, erfolgt.

Bei einer weiteren Ausführungsform des Verfahrens ist vorgesehen, dass das Schaltkriterium zumindest ein Element der folgenden Gruppe ist oder aufweist: ein Schaltschwellwert zum Schalten der Wärmesenke, ein Anschaltschwellwert zum Anschalten der Wärmesenke, ein Abschaltschwellwert zum Abschalten der Wärmesenke. Der Messwert der Regelgröße kann mit dem entsprechenden Schaltschwellwert, Anschaltschwellwert und/oder Abschaltschwellwert verglichen werden, wobei entsprechend das Schalten ausgelöst werden kann.

Bei einer weiteren Ausführungsform des Verfahrens ist vorgesehen, dass die Wärmesenke einen Kompressor und einen diesem nachgeschalteten Verdampfer aufweist. Kompressoren und Verdampfer können vorteilhaft einfach mittels Anschalten und Ausschalten angesteuert werden. Ferner ist es alternativ und/oder zusätzlich denkbar, eine Verdampfertemperatur mittels weiteren Stellgliedern, beispielsweise ein Expansionsventil, einzustellen.

Bei einer weiteren Ausführungsform ist vorgesehen, dass die Regelgröße zumindest ein Element der folgenden Gruppe aufweist: eine Innenfeuchte des Innenraums, eine Ausblastemperatur für dem Innenraum zugeordnete Ausblasöffnungen, eine Temperatur des Innenraums, eine Beschlagfeuchte einer den Innenraum abgrenzenden Scheibe und/oder dass die Störgröße zumindest ein Element der darauf folgenden Gruppe aufweist: eine Außenfeuchte, eine Außentemperatur der Umgebung des Fahrzeugs und/oder dass der Schaltschwellwert zumindest ein Element der folgenden Gruppe aufweist: eine Komfortfeuchte des Innenraums, eine Sollausblastemperatur der Ausblasöffnungen, eine Solltemperatur des Innenraums, ein Beschlagfeuchteschwellwert und/oder dass der Abschaltschwellwert der Schaltschwellwert erniedrigt um einen Hystereseoperator ist und/oder dass der Anschaltschwellwert der Schaltschwellwert erhöht um den Hystereseoperator ist. Vorteilhaft kann ein Zustand des Innenraums, betreffend die Innenfeuchte, Beschlagfeuchte sowie die Temperatur eingestellt werden. Vorteilhaft kann für die unterschiedlichen Teilgrößen der Regelgröße, die im Sinne einer Mehrgrößengröße bzw. vektoriellen Größe verstanden werden kann, das Verfahren vorteilhaft angewendet werden. Vorteilhaft kann für jeden einzelnen Schaltschwellwert, beispielsweise für die Komfortfeuchte, die Sollausblastemperatur, die Beschlagfeuchte und/oder die Solltemperatur geprüft werden, inwieweit für das jeweilige Kriterium die Schalthäufigkeit den Schalthäufigkeitsschwellwert überschreitet. Für jede Teilgröße der Regelgröße kann ein separater Schalthäufigkeitsschwellwert festgelegt werden. Sobald für eines der Kriterien die Schalthäufigkeit den jeweiligen Schalthäufigkeitsschwellwert übersteigt, kann eine entsprechende Anpassung, beispielsweise mittels des Hystereseoperators, vorgenommen werden.

Bei einer weiteren Ausführungsform des Verfahrens ist vorgesehen, dass der Veränderungsoperator den Hystereseoperator erhöht. Vorteilhaft kann durch Erhöhung des Hystereseoperators die Schalthäufigkeit verringert werden. Es ist denkbar, dass für den Abschaltschwellwert und den Ausschaltschwellwert unterschiedliche Hystereseoperatoren angewendet werden. Dabei ist es auch denkbar, nur für einen der Schwellwerte, also beispielsweise nur für das Abschalten, den Hystereseoperator, insbesondere in Form eines Offsets, anzuwenden.

Die Aufgabe ist ferner bei einem Kraftfahrzeug mit einer Klimatisierung eines Innenraums des Kraftfahrzeugs eingerichtet, ausgelegt und/oder konstruiert zum Durchführen eines Verfahrens nach einem der vorhergehenden Schritte gelöst. Es ergeben sich die vorab beschriebenen Vorteile.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Beschriebene und/oder bildlich dargestellte Merkmale bilden für sich oder in beliebiger sinnvoller Kombination den Gegenstand der Erfindung, gegebenenfalls auch unabhängig von den Ansprüchen, und können insbesondere zusätzlich auch Gegenstand einer oder mehrerer separaten Erfindung/en sein. Gleiche, ähnliche und/oder funktionsgleiche Teile sind mit gleichen Bezugszeichen versehen. Es zeigen:

Fig. 1    eine schematische Ansicht eines Funktionsprinzips einer Klimatisierung eines Innenraums eines Fahrzeugs; und

Fig. 2    einen Verlauf von Schaltvorgängen einer Wärmesenke zum Klimatisieren des Innenraums über der Zeit zusammen mit einem Verlauf einer mittels der Wärmesenke beeinflussbaren Regelgröße über der Zeit.

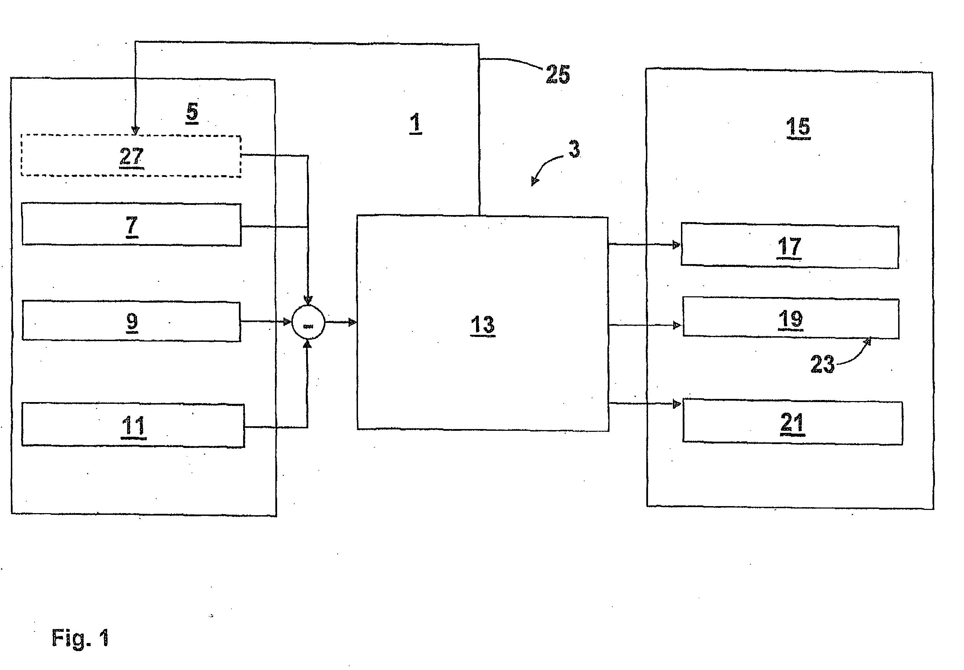

Fig. 1 zeigt für ein mittels des Bezugszeichens 1 angedeutetes Fahrzeug eine schematische Ansicht eines Klimasteuergerätes (Klimatisierung) 3 für einen nicht näher dargestellten Innenraum des Fahrzeugs 1. Die Klimatisierung 3 ist einem eine Wärmesenke 23 aufweisenden Kältekreislauf des Fahrzeugs 1 zugeordnet und weist als Eingang 5 als Störgrößen eine Sonnenintensität 7 und eine Außentemperatur 11 auf. Ferner kann optional als Störgröße in 5 ein korrigierter Taupunktabstand zugefügt werden, wobei dieser als Differenz von gemessenem Taupunkt plus Sicherheitsabstand und gemessener Scheibentemperatur definiert ist. Dieser Abstand beeinflusst die Verdampfertemperatur, die Gebläsespannung und die Luftverteilungsklappen, beispielsweise eine Defrostklappe. Als Führungsgröße ist eine Temperaturdifferenz 9 aus einer Soll-Innenraumtemperatur und einer Ist-Innenraumtemperatur des Innenraums des Fahrzeugs 1 vorgesehen. Die Störgrößen Sonnenintensität und Außentemperatur können mittels geeigneter Sensorvorrichtungen des Fahrzeugs 1 ermittelt und/oder geschätzt werden und sind auf die Temperaturdifferenz 9 aufgeschaltet. Der Eingang 5 wird an einen Regler 13 weitergeleitet, der diesen in eine Regelungskennziffer, beispielsweise zwischen 0 und 255, umsetzt. Mittels der Regelungskennziffer des Reglers 13 wird ein Ausgang 15 gesteuert. Der Ausgang 15 weist als Stellgrößen eine Gebläsespannung 17, eine Soll-Verdampfertemperatur 19 eines Verdampfers der Klimatisierung 3 sowie eine Klappenstellung 21 zur Steuerung einer Luftverteilung des Innenraums des Fahrzeugs 1 auf. Bei der Soll-Verdampfertemperatur 19 kann es sich alternativ und/oder zusätzlich auch um einen Ausblastemperatur an dem Innenraum zugeordneten Ausblasöffnungen zum Einblasen von Luft in den Innenraum handeln. Näherungsweise kann jedoch angenommen werden, dass die Soll-Verdampfertemperatur 19 der Ausblastemperatur einem konstanten oder variablen Nacherwärmungsoffset entspricht. Die Wärmesenke 23 weist einen Kompressor 25 sowie einen diesem nachgeschalteten Verdampfer 27 des Kältekreislaufs auf. Zum Einstellen einer entsprechenden Ist-Verdampfertem-peratur beziehungsweise der sich daraus ergebenden Ausblastemperatur kann ein entsprechender, nicht näher dargestellter Führungsregler zur Steuerung der Wärmesenke 23 beziehungsweise des nicht näher dargestellten Kompressors und Verdampfers der Wärmesenke 23 vorgesehen sein.

Mittels eines Regelverhaltens des Reglers 13, insbesondere einem Schaltverhalten 25 kann eine Außenfeuchte 27 einer nicht näher dargestellten Umgebung des Fahrzeugs 1 abgeschätzt werden. Vorteilhaft kann die abgeschätzte Außenfeuchte 27 ebenfalls auf die Temperaturdifferenz 9 aufgeschaltet werden, was das Schaltverhalten 25 des Reglers 13 beeinflusst. Vorteilhaft kann dies so erfolgen, dass das Schaltverhalten 25 einen gewünschten Zustand einnimmt, beispielsweise eine maximal tolerierbare Schalthäufigkeit nicht übersteigt.

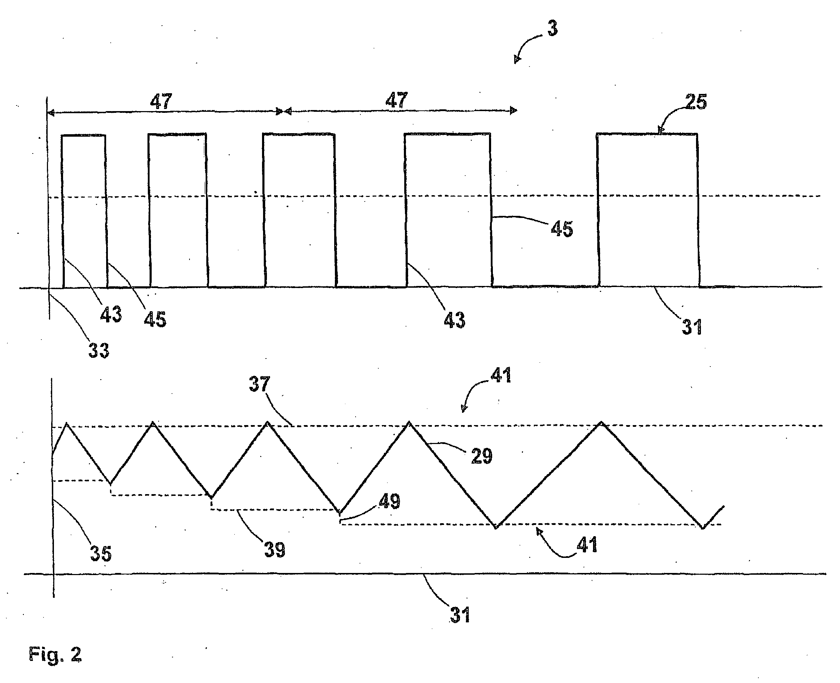

Figur 2 zeigt das Schaltverhalten 25 des Reglers 13 exemplarisch für eine Innenfeuchte 29, deren jeweilige Reaktion auf das Schaltverhalten 25 ebenfalls in Figur 2 über der Zeit dargestellt ist. Die Innenfeucht kann beispielsweise mittels eines dem Innenraum zugeordneten Feuchtesensors ermittelt beziehungsweise gemessen werden. Entsprechend ist auf einer gemeinsamen x-Achse 31 eine Zeit aufgetragen. Auf einer ersten y-Achse 33 ist das Schaltverhalten 25 und auf einer zweiten y-Achse 35 die Innenfeuchte 29 aufgetragen. Zusammen mit der Innenfeuchte 29 sind ein Anschaltschwellwert 37 sowie ein Abschaltschwellwert 39 als Schaltkriterium 41 des Reglers 13 über der Zeit aufgetragen. Es ist zu erkennen, dass der Regler 13 auf einen Anstieg der Innenfeuchte 29 über den Anschaltschwellwert 37 des Schaltkriteriums 41 hinaus mit einem Anschaltvorgang 43 reagiert. Entsprechend reagiert der Regler 13 auf ein Unterschreiten der Innenfeuchte 29 des Abschaltschwellwerts 39 des Schaltkriteriums 41 mit einem Abschaltvorgang 45. Es ist zu erkennen, dass dadurch die Innenfeuchte 29 um das Schaltkriterium 41 herumschwingt, wobei gegebenenfalls ein leichtes Überschwingen jeweils über den Anschaltschwellwert 37 hinaus und unter den Abschaltschwellwert 39 gegeben sein kann. Alternativ und/oder zusätzlich ist es denkbar, dass es sich bei dem Schaltkriterium 41 um einen einheitlichen Schwellwert handelt. Alternativ und/oder zusätzlich kann der Schwellwert mit einem Hystereseoperator verrechnet werden, so dass sich um das Schaltkriterium 41 herum eine Hysterese ergibt.

Abschaltschwellenwert 39 vorzugsweise ist nicht ein Innenfeuchtewert, sondern die momentane Entfeuchtungsleistung des Verdampfer zuzüglich eines Feuchtepotential der Außenluft. Falls diese kleiner ist als die Soll-Innenfeuchte, die auf eine auf den Verdampfer bezogene Temperatur umgerechnet wurde, so wird der Kompressor wieder abgeschaltet. Kommt es innerhalb des Zeitintervalls 47 zu einer Überschreitung der Ein/Ausschaltungen wird eine Aufschaltung auf en Abschaltschwellenwert vorgenommen.

In der Darstellung der Figur 2 ergibt sich ebenfalls eine Hysterese, da separat der Anschaltschwellwert 37 und der Abschaltschwellwert 39 vorgesehen sind.

Gemäß der Darstellung der Figur 2 wird der Abschaltschwellwert 39 auf eine nicht näher dargestellte Außenfeuchte einer Umgebung des Fahrzeugs 1 adaptiert. Dazu wird innerhalb eines Zeitintervalls 47 eine Schalthäufigkeit des Reglers 13 ermittelt. In einem exemplarisch in Figur 2 eingezeichneten Zeitintervall 47, das links dargestellt ist, finden beispielsweise drei Einschaltvorgänge statt. Vorliegend ist ein Anschalthäufigkeitsschwellwert vorgesehen, beispielsweise von zwei Schaltvorgängen: Dieser Anschalthäufigkeitsschwellwert wird in dem in Figur 2 links dargestellten Zeitintervall 47 überschritten. Zum Adaptieren des Schaltverhaltens 25 wird bei Überschreiten des Schalthäufigkeitsschwellwerts das Schaltkriterium 41 angepasst. Hierzu wird ein Veränderungsoperator 49 auf den Abschaltschwellwert 39 des Schaltkriteriums 41 angewandt. Der Veränderungsoperator 49 wird bei dem nächstmöglichem Abschaltvorgang 45, bei dem der Schalthäufigkeitsschwellwert überschritten ist, angewandt. Vorliegend handelt es sich bei dem Veränderungsoperator 49 um einen Erniedrigungsoperator, beispielsweise einen Offset, der den Abschaltschwellwert 39 erniedrigt. Bei dem Veränderungsoperator 49 kann es sich alternativ und/oder zusätzlich um den Hystereseoperator handeln, der eine entsprechende Hysterese des Schaltkriteriums 41 vergrößert.

Die anfänglichen, in Figur 2 links dargestellten Werte des Anschaltschwellwerts 37 und des Abschaltschwellwerts 39 sind auf einen nicht näher dargestellten Startwert der Außenfeuchte der Umgebung eingestellt. In der Darstellung der Figur 2 liegt jedoch die tatsächliche Außenfeuchte der Umgebung höher als der Startwert, was eine größere Hysterese bzw. einen größeren Abstand des Anschaltschwellwerts 37 und des Abschaltschwellwerts 39 erforderlich macht, um ein zu schnelles Schwingen des Reglers 13 bzw. eine zu große Schalthäufigkeit des Reglers 13 zu vermeiden. Es ist zu erkennen, dass im Verlauf durch jeweiliges Anwenden des Veränderungsoperators 49 nach den jeweiligen Abschaltvorgängen 45 sich der Abstand zwischen dem Anschaltschwellwert und dem Abschaltschwellwert vergrößert, wobei sich auch eine Frequenz des Reglers 13 bzw. die Schalthäufigkeit verringert. Zur Veranschaulichung ist, in Figur 2 rechts dargestellt, das Zeitintervall 47 nochmals aufgetragen. Es ist zu erkennen, dass in dem rechts aufgetragenen Zeitintervall 47 nur zwei Abschaltvorgänge 45 des Reglers 13 erfolgen, so dass der Schalthäufigkeitsschwellwert nicht überschritten ist. Es ist zu erkennen, dass für diesen Fall der Veränderungsoperator 49 nicht angewendet wird.

Alternativ und/oder zusätzlich kann das mittels der Figur 2 näher erläuterte Verfahren nicht nur für die Innenfeuchte 29 sondern auch für eine Innentemperatur des Innenraums und/oder eine Ausblastemperatur für dem Innenraum zugeordnete Ausblasöffnungen und/oder eine Beschlagfeuchte einer den Innenraum abgrenzenden Scheibe als Regelgröße, insbesondere im Sinne einer Mehrgrößengröße, angewandt werden. In diesem Fall kann jeweils abgeprüft werden, ob Schaltanforderungen an den Regler 13 von ein und derselben Regelteilgröße zu einem Überschreiten der Schalthäufigkeit innerhalb des Zeitintervalls 47 führen. Alternativ und/oder zusätzlich ist es denkbar, für jede der Regelteilgrößen ein eigenes Zeitintervall 47 zu definieren und entsprechend dazu einen jeweiligen Schalthäufigkeitsschwellwert.

Die Wärmesenke 23 bzw. ein nicht näher dargestellter Kompressor sowie ein diesem nachgeschalteter Verdampfer der Wärmesenke 23 kann alternativ und/oder zusätzlich mittels unterschiedlicher Kriterien mittels eines Anschaltvorgangs 43 angeschaltet werden. Dabei kann es sich beispielsweise um eine manuelle Defrostanforderung, ein Vorliegen eines Sollwerts "maximales Kühlen", ein festgestellter Zustand des Innenraums, bei dem eine angeforderte Kühlleistung ohne Betrieb der Wärmesenke nicht erreicht wird und/oder ein festgestellter Zustand einer den Innenraum abgrenzenden Scheibe, die ohne eingeschaltete Wärmesenke nicht beschlagfrei gehalten werden kann und/oder das Überschreiten der Innenfeuchte 29 des Anschaltschwellwerts 37 und/oder das Überschreiten der Schalthäufigkeit des Schalthäufigkeitsschwellwerts handeln.

Alternativ und/oder zusätzlich ist es möglich, den Kompressor der Wärmesenke 23 nach einem Anschaltvorgang 43 für ein vorgebbares weiteres Zeitintervall angeschaltet zu lassen, selbst dann, falls eine Deaktivierung der Wärmesenke 23 mittels des Reglers 23 erfolgen würde beziehungsweise angefordert wird.

Alternativ und/oder zusätzlich kann die Kompressoranforderung für die Wärmesenke 23 wieder deaktiviert bzw. zurückgenommen werden, falls die manuelle Defrostanforderung nicht mehr vorliegt und/oder der Sollwert "maximales Kühlen" nicht mehr vorliegt und/oder kein manueller Umluftbetrieb vorliegt und/oder Signale eines nicht näher dargestellten Innenfeuchtesensors zum Messen der Innenfeuchte 29 plausibel sind und/oder keine aktive Ansteuerung einer Umluftklappe der Klappensteuerung 21, bei der insbesondere ein Umluftklappenwinkel von 100 % aufgrund eines Schadstoffevents eines nicht näher dargestellten Abgasschadstoffsensors gemeldet sind.

Alternativ und/oder zusätzlich kann die Kompressoranforderung wieder zurückgenommen werden, falls errechnet und/oder abgeschätzt werden kann, dass ohne Kompressorbetrieb kein Scheibenbeschlag der Scheibe auftritt und/oder die Sollausblastemperatur für die Verdampfertemperatur 19 auch ohne Kompressorbetrieb der Wärmesenke 23 erreicht werden kann und/oder die Sollinnenfeuchte der Innenfeuchte 29 bezogen auf eine aktuelle Innenraumtemperatur auch ohne Kompressorbetrieb nicht überschritten wird, sofern nicht eine vorgegebene maximale Anzahl von Anschaltvorgängen 43 und Abschaltvorgängen 45 innerhalb eines Fahr- oder Betriebszyklusses überschritten und eine vorgegebene Kompressormindestlaufzeit nicht unterschritten sind.

Alternativ und/oder zusätzlich kann die Anforderung auch zurückgenommen werden, wenn der Kompressor der Wärmesenke 23 über die Außentemperatur 11, eine manuelle Abwahl durch einen Fahrer des Fahrzeugs, insbesondere durch Betätigen einer Klimatisierungaustaste und/oder in einem Stoppbetrieb, bei dem eine Antriebsquelle des Fahrzeugs 1 abgeschaltet ist, ausgeschaltet ist, sofern entsprechende Bedingungen dafür erfüllt sind. Der Kompressor wird erst ausgeschaltet, wenn keine der vorab beschriebenen Kompressoranforderungen mehr vorliegt.

Vorteilhaft kann mittels des Veränderungsoperators 49 der Abschaltschwellwert 39 adaptiert werden, wobei vorteilhaft dazu keine Messvorrichtung zum Ermitteln der Außenfeuchte 27 notwendig ist. Vorteilhaft kann dies mittels des zurückgeführten Schaltverhaltens 25 erfolgen, wobei insbesondere die Außenfeuchte 27 indirekt gemessen bzw. abgeschätzt werden kann.

Als Startwert wird, wie in Figur 2 links dargestellt, ein vergleichsweise geringer Wert der Außenfeuchte 27 vorgegeben bzw. angenommen. Dies führt grundsätzlich, falls eine deutlich höhere Außenfeuchte vorliegt, zu einer vergleichsweise großen Schalthäufigkeit des Reglers 13, die vorteilhaft iterativ bzw. adaptiv in Abhängigkeit der Anschaltvorgänge 43 und/oder Abschaltvorgänge 45 pro Zeitintervall 47 mittels des Veränderungsoperators 49 angehoben wird. Vorteilhaft kann sich dadurch die Klimatisierung 3 iterativ an die tatsächlich vorhandene Außenfeuchte 27 annähern bzw. herantasten.

Wird der Kompressor innerhalb des Zeitintervalls 47, das beispielsweise parametrierbar sein kann, insbesondere auf 15 Minuten, häufiger als der Schalthäufigkeitsschwellwert, beispielsweise von zweimal, über ein und denselben Anforderungsgrund, beispielsweise die Beschlagsfeuchte, die Komfortfeuchte und/oder der Kälteleistungsbedarf, eingeschaltet, so wird die betreffende Wiederausschaltgrenze bzw. der Abschaltschwellwert 39 mittels des Veränderungsoperators 49 verändert bzw. angepasst.

Alternativ und/oder zusätzlich ist es denkbar, die Veränderungen des Veränderungsoperators 49 zumindest teilweise wieder rückgängig zu machen, beispielsweise nach einer vorgebbaren Zeit, um so ein erneutes Herantasten, beispielsweise an eine veränderte Umgebungsbedingungen wie eine geänderte Außenfeuchte, zu ermöglichen. Gegebenenfalls ist es auch denkbar, das Verfahren umzukehren, insbesondere mit einem hohen Starwert für die Störgröße zu beginnen und die Schalthäufigkeit iterativ zu erhöhen, bis sich eine optimale Einstellung gefunden hat.

Eine applikative Umsetzung der Erfindung kann folgendermaßen erfolgen:

In Abhängigkeit der Einschalthäufigkeit pro Zeitintervall erfolgt eine Wiederausschaltkorrektur durch Anwendung des Veränderungsoperators auf den Wert von Parametern eines Ausblastemperaturepsilons, einer Komfortfeuchte oder einer Beschlags-Feuchte.

Wird der Kompressor innerhalb einer parametrisierbaren Zeitspanne (z.B. 15min) mehr als Grenzwert (z.B. ein oder 2mal) über ein und denselben Anforderungsgrund (BeschlagsFeuchte, Komfortfeuchte bzw. Kälteleistungsbedarf) eingeschaltet, so wird die betreffende Wiederausschaltgrenze angehoben.

a) für Ausblastemperaturepsilon (Kälteleistungsbedarf) wird der Wert" Frischluftaufheizungsoffset" um Parameter "Zusatz-Offset" (z.B. =1 K) angehoben, bei jeder weiteren gleichen Kompressoranforderung darüber hinaus wird "Zusatz-Offset" erneut um 1 K erhöht und damit die Wiederausschaltbedingung verschärft

b) für Komfortfeuchte , wird der Wert "angenommenes Feuchtepotential der Außenluft" um Parameter "Zusatz-Offset" (default=1 K) angehoben, bei jeder weiteren gleichen Kompressoranforderung, darüber hinaus wird "Zusatz-Offset" erneut um 1 K erhöht und damit die Wiederausschaltdedingung verschärft

c) für Beschlags-Feuchte, wird der Wert "angenommenes Feuchtepotential der Außenluft" um Parameter "Zusatz-Offset" (z.B. =1 K) angehoben, bei jeder weiteren gleichen Kompressoranforderung, darüber hinaus wird " Zusatz-Offset "erneut um z.B. 1K erhöht und damit die Wiederausschaltdedingung verschärft.

Ein Ein/Ausschalten des Kompressors kann in folgender Weise erfolgen.

1. Kompressor anfordern

Der Kompressor wird vom Klimasteuergerät nur angefordert bzw. eingeschaltet, wenn:

- Eine manuelle Defrostanforderung vorliegt
- Der Sollwert "LO" = maximales Kühlen vorliegt
- Die angeforderte Kühlleistung ohne Kompressorbetrieb nicht erreicht wird
- Scheibenbeschlag ohne aktiven Kompressor nicht garantiert werden kann
- Die Sollinnenfeuchte bezogen auf die aktuelle Innenraumtemperatur ohne Kompressorbetrieb nicht erreicht wird
- Eine hohe Anzahl von Ein- und Ausschaltvorgängen innerhalb eines Fahrzykusses überschritten wird.

Wurde der Kompressor angefordert, so bleibt er mindestens für eine definierte Zeitspanne eingeschaltet.
Es wird keine Anforderung aktiviert, wenn der Kompressor durch ein höher priorisiertes Abschaltkriterium z.B. manuelle Abwahl des Kompressorbetriebes durch den Kunden ausgeschaltet ist.
Ferner gilt:

Kompressor bei Kälteleistungsbedarf anfordern

- Anforderung des Kompressors bei Nichterreichen der Sollausblastemperatur Der Kompressor soll angefordert werden, wenn die Differenz aus Soll- und Istausblastemperatur (Ausblasepsilon ABL_EPS) vorzeichenbehaftet einen definierten Grenzwert unterschreitet (z.B. -1,66K, Sonderfall Cabrio offen: -5K).

- Betrachtet wird das jeweils (vorzeichenbehaftet) kleinste Ausblasepsilon aller Regelzonen.
- Die Anforderung wird nur aktiviert, wenn gleichzeitig die Temperaturklappenwinkel der anfordernden Zone kleiner parametrisierbarem Grenzwert (1%) ist und die Anforderungsbedingung länger als parametrisierbare Entprellzeit (10sec, Sonderfall Cabrio offen: 20sec) ununterbrochen anliegt.
ABL_EPSmin < Grenzwert && TempKlappenwinkel < Grenzwert && Entprellzeit abgelaufen

Kompressor bei Gefahr von Scheibenbeschlag anfordern

- Der Kompressor wird angefordert, wenn ein vorgegebener Sicherheitsabstand der Scheibentemperatur zum, vom Feuchtesensor ermittelten Ist-Taupunkt unterschritten wird
- Der Sicherheitsabstand zum Taupunkt wird über Kennlinien in Abhängigkeit von Faktoren die die Beschlagswahrscheinlichkeit beeinflussen ermittelt/vorgegeben
(Außentemperatur, Umluftklappenwinkel, Kompressorstatus im letzten Fahrzyklus, Wischerbetrieb, Sonnenintensität, Fahrgeschwindigkeit etc)

## Taupunkt + Sicherheitsabstand > Scheibentemp && Entprellzeit abgelaufen

Kompressor bei Überschreitung der Komfortfeuchte anfordern

- Der Kompressor wird angefordert wenn die über den Feuchtesensors ermittelte Ist-Innenfeuchte eine Soll-Innenfeuchte bezogen aufdie Innenraumtemperatur des Fahrzeuges (Vorgabe einer Sollfeuchte in Abhängigkeit der Innenfühlertemperatur) um einen parametrisierbaren Schwellenwert (z.B. 0%) überschreitet.

- Der Schwellenwert muss für eine parametrisierbare Zeitdauer (45sec) ununterbrochen überschritten sein, ehe der Kompressor eingeschaltet wird
Relative Sollinnenfeuchte < Relative Istinnenfeuchte (beides bezogen auf die Innenraumtemp) && Entprellzeit abgelaufen

Kompressoranforderung, weil Mindesteinschaltzeit noch nicht überschritten

- Wurde der Kompressor angefordert, so ist eine parametrisierbare Mindestlaufzeit (z.B.120sec) des Kompressors einzuhalten, ehe er wieder ausgeschaltet werden kann, auch wenn alle sonstigen Anforderungskriterien nicht mehr erfüllt sind.

Alle andere Kompressorabschaltungen z.B. im Fehlerfall, Hoch- oder Niederdruckerkennung, bei zu niedriger Außentemperatur, manueller Abwahl des Kompressors durch den Kunden oder Abschaltungen über Motorsteuergerät und im aktiven Start-Stoppbetrieb haben gegenüber einer Anforderung wie oben beschrieben, Priorität.

2. Kompressoranforderung zurücknehmen bzw. Kompressor ausschalten

Eine Kompressoranforderung kann auch im aktiven Fahrzyklus wieder deaktiviert bzw. zurückgenommen werden wenn:

- Keine manuelle Defrostanforderung mehr vorliegt
- kein Sollwert "LO" = maximales Kühlen vorliegt
- kein manueller oder automatischer Umluftbetrieb vorliegt
und wenn errechnet oder abgeschätzt werden kann, das:

- ohne Kompressorbetrieb kein Scheibenbeschlag auftritt

- die Sollausblastemperatur auch ohne Kompressorbetrieb erreicht werden kann

- Die Sollinnenfeuchte bezogen auf die aktuelle Innenraumtemperatur Innenraumtemperatur auch ohne Kompressorbetrieb nicht überschritten wird
sofern nicht eine vorgegebene maximaler Anzahl von Ein/Aus-Schaltvorgängen bezogen auf das oben beschriebene Handling überschritten und eine vorgegebene Kompressormindestlaufzeit nicht unterschritten sind.

Eine Anforderung kann auch zurückgenommen werden, wenn der Kompressor über Außentemperatur, manuelle Abwahl durch den Kunden (AC off) oder im aktiven Stoppbetrieb ausgeschaltet ist, sofern die Bedingungen dafür erfüllt sind.

Der Kompressor wird erst ausgeschaltet, wenn keine Kompressoranforderung mehr vorliegt.

Ferner gilt:

Zurücknahme der Kompressoranforderung aufgrund Kälteleistungsbedarf

- Die Kompressoranforderung aufgrund Kälteleistungsbedarf kann zurückgenommen werden, wenn die kleinste Sollausblastemperatur aller Zonen größer ist als die Außentemperatur plus parametrisierbaren Frischluftaufheizungsoffset (z.B. 5K, Sonderfall Cabrio Dach offen: 2K)
- Die Zurücknahme der Kompressoranforderung erfolgt nur, wenn gleichzeitig der Kompressor-Soll-Strom kleiner einem parametrisierbarem Schwellenwert (600mA)

### Auablastemp_min > Außentemp + Nacherwärmungsoffset && Kompr_Strom < Grenzwert && Entprellzeit abgelaufen

Zurücknahme der Kompressoranforderung aufgrund Gefahr des Scheibenbeschlags ohne Einsatz eines Außenfeuchtesensors

- Die Kompressoranforderung aufgrund von erkannter Beschlagsgefahr kann zurückgenommen werden, wenn ein korrigierter Taupunktabstand inklusive des vorgegebenen Sicherheitsabstandes größer ist als die Summe der momentanen Entfeuchtungsleistung des Verdampfers bezogen auf das generelle Entfeuchtungspotential des Verdampfers und dem angenommenen Feuchtepotential der Außenluft

- Das Feuchtepotential der Außenluft wird über eine Kennlinie in Abhängigkeit der Außentemperatur vorgegeben und beruht auf Erfahrungswerten. Hierbei werden mittlere relative Feuchten (100..60%) der Außenluft angenommen

- Die Kompressoranforderung aufgrund erkannter Beschlagsgefahr wird zurückgenommen wenn: "die maximale Sollverdampfertemperatur" minus "Verdampfer-Isttemperatur" (=momentanes Entfeuchtungspotential des Verdampfers) plus dem "angenommenes Feuchtepotential der Außenluft" kleiner als der korrigierte Taupunktabstand ist

### (Verd_Max_Temp - Verdampfertemperatur) + Feuchtepotential (=Offset Temperaturabstand) < (Scheibentemp -Taupunkt + Sicherheitsabstand_Beschlag) && Entprellzeit abgelaufen

Zurücknahme der Kompressoranforderung aufgrund Komfortfeuchte ohne Einsatz eines Außenfeuchtesensor

- Die Kompressoranforderung aufgrund von erkannter Komfortfeuchte bezogen auf die Innenraumtemperatur kann zurückgenommen werden, wenn das verdampfertemperaturbezogene Äquivalent zur Abeichung Soll- zu Istinnenfeuchte größer ist als die Summe aus vorgegebenen Sicherheitsabstandes und der momentanen Entfeuchtungsleistung des Verdampfers bezogen auf das generelle Entfeuchtungspotential des Verdampfers und dem angenommenen Feuchtepotential der Außenluft
- Das Feuchtepotential der Außenluft wird über eine Kennlinie in Abhängigkeit der Außentemperatur vorgegeben und beruht auf Erfahrungswerten. Hierbei werden mittlere relative Feuchten (100..60%) der Außenluft angenommen.

EPS_Verdampfer_Innefeuchte > (Verd_Max_Temp - Verdampfertemperatur) + Feuchtepotential (=Offset Temperaturabstand) + Sicherheitsabstand_Innenfeuchte && Entprellzeit abgelaufen

**Bezugszeichenliste**

| | |
|---|---|
| 1 | Fahrzeug |
| 3 | Klimatisierung |
| 5 | Eingang |
| 7 | Sonnenintensität |
| 9 | Temperaturdifferenz |
| 11 | Außentemperatur |
| 13 | Regler |
| 15 | Ausgang |
| 17 | Gebläsespannung |
| 19 | Soll-Verdampfertemperatur |
| 21 | Klappenstellung |
| 23 | Wärmesenke |
| 25 | Schaltverhalten |
| 27 | Außenfeuchte |
| 29 | Innenfeuchte |
| 31 | x-Achse |
| 33 | erste y-Achse |
| 35 | zweite y-Achse |
| 37 | Anschaltschwellwert |
| 39 | Abschaltschwellwert |
| 41 | Schaltkriterium |
| 43 | Anschaltvorgang |
| 45 | Abschaltvorgang |
| 47 | Zeitintervall |
| 49 | Veränderungsoperator |

**Patentansprüche**

1. Verfahren zum Steuern einer Klimatisierung (3) eines Innenraums eines Fahrzeugs (1) mittels einer dem Innenraum zugeordneten Wärmesenke (23), mit:

   - Steuern der Wärmesenke (23) mittels Schalten der Wärmesenke (23) in Abhängigkeit eines Schaltkriteriums (41),
   - Ermitteln einer auf das Schaltkriterium (41) zurückgehenden Schalthäufigkeit der Wärmesenke (23), **dadurch gekennzeichnet**, durch den Schritt:
   - Anpassen des Schaltkriteriums (41) in Abhängigkeit der Schalthäufigkeit.

2. Verfahren nach dem vorhergehenden Anspruch, mit:

   - Adaptieren des Schaltkriteriums (41) auf eine in einer Außen - Umgebung des Fahrzeugs herrschende Störgröße mittels der Schalthäufigkeit.

3. Verfahren nach einem der vorhergehenden Ansprüche, mit

   - Verwenden eines mittels einer einem Innenraum des Fahrzeugs zugeordneten Messvorrichtung ermittelbaren Messwerts einer Regelgröße des Innenraums und des Schaltkriteriums (41) zum Schalten der Wärmesenke (23).

4. Verfahren nach einem der vorhergehenden zwei Ansprüche, mit:

   - Abschätzen der Störgröße mittels der Schalthäufigkeit.

5. Verfahren nach einem der vorhergehenden drei Ansprüche, mit:

   - Vorgeben eines Störgrößenstartwerts der Störgröße,
   - Einstellen des Schaltkriteriums (41) in Abhängigkeit des Störgrößenstartwerts.

6. Verfahren nach einem der vorhergehenden Ansprüche, mit:

   - Einstellen des Schaltkriteriums (41) in Abhängigkeit der Schalthäufigkeit mittels eines Veränderungsoperators (49).

7. Verfahren nach dem vorhergehenden Anspruch, mit zumindest einem des folgenden:

   - iteratives Anwenden des Veränderungsoperators (49) auf das Schaltkriterium (41),
   - iteratives Anwenden des Veränderungsoperators (49) auf das Schaltkriterium (41) solange die Schalthäufigkeit einen Schalthäufigkeitsschwellwert übersteigt.

8. Verfahren nach einem der vorhergehenden zwei Ansprüche, mit zumindest einem des folgenden:

   - iteratives Anwenden des Veränderungsoperators (49) auf das Schaltkriterium (41) jeweils für einen Schaltvorgang des Schaltens,
   - iteratives Anwenden des Veränderungsoperators (49) auf das Schaltkriterium (41) jeweils für einen Anschaltvorgang (43) oder einen Abschaltvorgang (45) des Schaltens.

9. Verfahren nach einem der vorhergehenden Ansprüche, wobei das Schaltkriterium (41) zumindest ein Element der folgenden Gruppe ist oder aufweist:

   - ein Schaltschwellwert zum Schalten der Wärmesenke (23),
   - ein Anschaltschwellwert (47) zum Anschalten der Wärmesenke (23),
   - ein Abschaltschwellwert (39) zum Abschalten der Wärmesenke (23).

10. Verfahren nach einem der vorhergehenden Ansprüche, wobei die Wärmesenke (23) einen Kompressor und einen diesem nachgeschalteten Verdampfer aufweist.

11. Verfahren nach einem der vorhergehenden Ansprüche, mit zumindest einem des folgenden:

    - wobei die Regelgröße zumindest ein Element der folgenden Gruppe aufweist: eine Innenfeuchte (29) des Innenraums, eine Ausblastemperatur für dem Innenraum zugeordnete Ausblasöffnungen, eine Temperatur des Innenraums, eine Beschlagfeuchte einer den Innenraum abgrenzenden Scheibe,
    - wobei die Störgröße zumindest ein Element der folgenden Gruppe aufweist: eine Außenfeuchte der Umgebung, eine Außentemperatur der Umgebung des Fahrzeugs,
    - wobei der Schaltschwellwert oder Anschaltschwellwert (37) zumindest ein Element der folgenden Gruppe aufweisen: eine Komfortfeuchte des Innenraums, eine Sollausblastemperatur der Ausblasöffnungen, eine Solltemperatur des Innenraums, einen Beschlagfeuchteschwellwert der Scheibe.

12. Verfahren nach einem der vorhergehenden Ansprüche, mit zumindest einem des folgenden:

    - wobei der Abschaltschwellwert (39) der Schaltschwellwert erniedrigt um ein Hystereseoperator ist,
    - wobei der Anschaltschwellwert (37) der Schaltschwellwert erniedrigt um den Hystereseoperator ist.

13. Verfahren nach einem der vorhergehenden Ansprüche, wobei der Veränderungsoperator (49) den Hystereseoperator erhöht.

14. Kraftfahrzeug (1) mit einer Klimatisierung (3) eines Innenraums des Kraftfahrzeugs (1), wobei die Klimatisierung (3) gemäß dem Verfahren des Anspruchs 1 gesteuert wird.

**Claims**

1. Method for controlling an air conditioning system (3) for a passenger compartment of a vehicle (1) by means of a heat sink (23) which is assigned to the passenger compartment, comprising:

   - controlling the heat sink (23) by means of switches of the heat sink (23) as a function of a switching criterion (41), and
   - determining a switching frequency of the heat sink (23) which is based on the switching criterion (41), **characterized by** the step of:
   - switching the switching criterion (41) as a function of the switching frequency.

2. Method according to the preceding claim, comprising:

   - adapting the switching criterion (41) to an interference variable, prevailing in an external environment of the vehicle, by means of the switching frequency.

3. Method according to one of the preceding claims, comprising:

   - using a measured value of a controlled variable of a passenger compartment of a vehicle, which can be determined by means of a measure device assigned to the passenger compartment, and the switching criterion (41) for switching the heat sink (23).

4. Method according to one of the preceding two claims, comprising:

   - estimating the interference variable by means of the switching frequency.

5. Method according to one of the preceding three claims, comprising:

   - predefining an interference variable starting value of the interference variable, and
   - setting the switching criterion (41) as a function of the interference variable starting value.

6. Method according to one of the preceding claims, comprising:

   - setting the switching criterion (41) as a function of the switching frequency by means of a change operator (49).

7. Method according to the preceding claim, comprising at least one of the following:

   - iterative application of the change operator (49) to the switching criterion (41), and
   - iterative application of the change operator (49) to the switching criterion (41) as long as the switching frequency exceeds a switching frequency threshold value.

8. Method according to one of the preceding two claims, comprising at least one of the following:

   - iterative application of the change operator (49) to the switching criterion (41), in each case for a switching process of the switching, and
   - iterative application of the change operator (49) to the switching criterion (41) in each case for a switching on process (43) or a switching off process (45) of the switching.

9. Method according to one of the preceding claims, wherein the switching criterion (41) is or has at least one element of the following group:

   - a switching threshold value for switching the heat sink (23),
   - a switch on threshold value (47) for switching on the heat sink (23), and
   - a switch off threshold value (39) for switching off the heat sink (23).

10. Method according to one of the preceding claims, wherein the heat sink (23) has a compressor and a vaporizer which is connected downstream thereof.

**11.** Method according to one of the preceding claims, comprising at least one of the following:

- wherein the controlled variable has at least one element of the following group: an internal moisture value (29) of the passenger compartment, a blowing temperature for blower openings assigned to the passenger compartment, a temperature of the passenger compartment, and a condensation moisture on a windowpane adjoining the passenger compartment,
- wherein the interference variable has at least one element of the following group: an external moisture of the surroundings, an external temperature of the surroundings of the vehicle,
- wherein the switching threshold value or switch on threshold value (37) has at least one element of the following group: a comfort moisture level of the passenger compartment, a set point blowing temperature of the blower openings, a set point temperature of the passenger compartment, and a condensation moisture threshold value of the windowpane.

**12.** Method according to one of the preceding claims, comprising at least one of the following:

- wherein the switch off threshold value (39) is the switching threshold value reduced by a hysteresis operator, and
- wherein the switch on threshold value (37) is the switching threshold value reduced by the hysteresis operator.

**13.** Method according to one of the preceding claims, wherein the change operator (49) increases the hysteresis operator.

**14.** Motor vehicle (1) having an air conditioning system (3) of a passenger compartment of the motor vehicle (1), wherein the air conditioning system (3) is controlled according to the method in Claim 1.


**Revendications**

**1.** Procédé destiné à commander une climatisation (3) d'un habitacle d'un véhicule (1) à l'aide d'un dissipateur thermique (23) associé à l'habitable, comprenant :

- la commande du dissipateur de chaleur (23) par commutation du dissipateur thermique (23) en fonction d'un critère de commutation (41),
- la détermination d'une fréquence de commutation du dissipateur thermique (23) en rapport avec le critère de commutation (41), **caractérisé par** l'étape de :
- l'adaptation du critère de commutation (41) en fonction de la fréquence de commutation.

**2.** Procédé selon la revendication précédente, avec :

- l'adaptation du critère de commutation (41) à une grandeur perturbatrice régnant dans l'environnement extérieur du véhicule à l'aide de la fréquence de commutation.

**3.** Procédé selon l'une quelconque des revendications précédentes, avec

- l'utilisation d'une valeur de mesure à l'aide d'un dispositif de mesure associé à l'habitacle du véhicule d'une grandeur de réglage de l'habitacle et du critère de commutation (41) destiné à commuter le dissipateur de chaleur (23).

**4.** Procédé selon l'une quelconque des deux revendications précédentes, avec :

- l'estimation de la grandeur perturbatrice à l'aide de la fréquence de commutation.

**5.** Procédé selon l'une quelconque des trois revendications précédentes, avec :

- la prédéfinition d'une valeur de démarrage de grandeur perturbatrice pour la grandeur perturbatrice,
- le réglage du critère de commutation (41) en fonction de la valeur de démarrage de grandeur perturbatrice.

**6.** Procédé selon l'une quelconque des revendications précédentes, avec :

- le réglage du critère de commutation (41) en fonction de la fréquence de commutation à l'aide d'un opérateur de variation (49).

7. Procédé selon la revendication précédente, avec au moins l'une des étapes suivantes :

- l'utilisation itérative de l'opérateur de variation (49) sur le critère de commutation (41),
- l'utilisation itérative de l'opérateur de variation (49) sur le critère de commutation (41) aussi longtemps que la fréquence de commutation dépasse une valeur seuil pour la fréquence de commutation.

8. Procédé selon l'une quelconque des revendications précédentes, avec au moins l'un des points suivants :

- l'utilisation itérative de l'opérateur de variation (49) sur le critère de commutation (41), chaque fois pour un processus de commutation de la commutation,
- l'utilisation itérative de l'opérateur de variation (49) sur le critère de commutation (41) chaque fois pour un processus de connexion (43) ou un processus de déconnexion (45) de la commutation.

9. Procédé selon l'une quelconque des revendications précédentes, le critère de commutation (41) étant ou comportant au moins un élément du groupe suivant :

- une valeur seuil de commutation pour connecter le dissipateur thermique (23),
- une valeur seuil de connexion (47) pour connecter le dissipateur thermique (23),
- une valeur seuil de déconnexion (39) pour déconnecter le dissipateur thermique (23).

10. Procédé selon l'une quelconque des revendications précédentes, le dissipateur de chaleur (23) comportant un compresseur et un évaporateur monté en aval de celui-ci.

11. Procédé selon l'une quelconque des revendications précédentes, avec au moins l'un des points suivants :

- la grandeur de réglage comportant au moins un élément du groupe suivant : une humidité intérieure (29) de l'habitacle, une température de soufflage pour des orifices de soufflage associés à l'habitacle, une température de l'habitacle, une humidité d'embuage d'une vitre délimitant l'habitacle,
- la grandeur de perturbation comportant au moins un élément du groupe suivant : une humidité extérieure de l'environnement, une température extérieure de l'environnement du véhicule,
- la valeur seuil de commutation ou la valeur seuil de connexion (37) comportant au moins un élément du groupe suivant : une humidité de confort de l'habitacle, une température de consigne pour le soufflage des orifices de soufflage, une température de consigne pour l'habitacle, une température seuil pour l'embuage de la vitre.

12. Procédé selon l'une quelconque des revendications précédentes, avec au moins l'un des points suivants :

- la valeur seuil de déconnexion (39) abaissant la valeur seuil de commutation de la valeur d'un opérateur d'hystérèse,
- la valeur seuil de connexion (37) abaissant la valeur seuil de commutation de la valeur de l'opérateur d'hystérèse.

13. Procédé selon l'une quelconque des revendications précédentes, l'opérateur de modification (49) augmentant l'opérateur d'hystérèse.

14. Véhicule automobile (1) avec une climatisation (3) d'un habitacle du véhicule automobile (1), la climatisation (3) étant commandée selon le procédé de la revendication 1.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0316545 B1
- DE 102004025010 B3

- US 2001048943 A